# EUROPEAN PATENT APPLICATION

(11) **EP 1 852 994 A1**
(43) Date of publication of application: **07.11.2007**
(21) Application number: 07008431.4
(22) Date of filing: 25.04.2007
(51) Int. Cl.: H04L 1/18

(54) **Method and apparatus for performing HARQ of a packet in a mobile communication system**

(30) Priority: 25.04.2006 KR 20060036979; 12.03.2007 KR 20070024067
(71) Applicant: Samsung Electronics Co., Ltd., Suwon-si, Gyeonggi-Do (KR)
(72) Inventor: Kim, Soeng-Hun, Suwon-si Gyeonggi-do (KR); Lee, Ju-Ho, Suwon-si Gyeonggi-do (KR); Van der Velde, Himke, Suwon-si Gyeonggi-do (KR); Van Lieshout, Gert Jan, Suwon-si Gyeonggi-do (KR)
(74) Representative: Grünecker, Kinkeldey, Stockmair & Schwanhäusser Anwaltssozietät

(57) **Abstract**

A method and an apparatus for performing Hybrid Automatic Repeat reQuest (HARQ) of a packet in a mobile communication system. A User Equipment (UE) receives transmission resource allocation information indicating a transmission resource for uplink packet transmission and indicating a valid duration of the transmission resource, from a Node B over a downlink control channel, and transmits an HARQ packet using the transmission resource through an HARQ operation for the valid duration. The Node B transmits the transmission resource allocation information to the UE over the downlink control channel, and receives the HARQ packet through the HARQ operation using the transmission resource for the valid duration.

## Description

### BACKGROUND OF THE INVENTION

### 1. Field of the Invention

The present invention relates generally to a mobile communication system, and in particular, to a method and apparatus for performing Hybrid Automatic Retransmission reQuest (HARQ) retransmission in a system using HARQ.

### 2. Description of the Related Art

A Universal Mobile Telecommunication Service (UMTS) system is a 3^{rd} Generation (3G) asynchronous mobile communication system that is based on Global System for Mobile Communications (GSM) and General Packet Radio Services (GPRS), both of which are European mobile communication systems, and uses Wideband Code Division Multiple Access (WCDMA).

In the 3^{rd} Generation Partnership Project (3GPP), which is in charge of UMTS standardization, Long Term Evolution (LTE) is being discussed as the next generation mobile communication system of the UMTS system. An LTE system, aimed for deployment in around 2010, is a technology for implementing highspeed packet based communication at about 100 Mbps. As such, several schemes are under discussion. One scheme includes the reduction of the number of nodes located in a communication path by simplifying the network configuration, and another scheme includes maximally approaching wireless protocols to wireless channels.

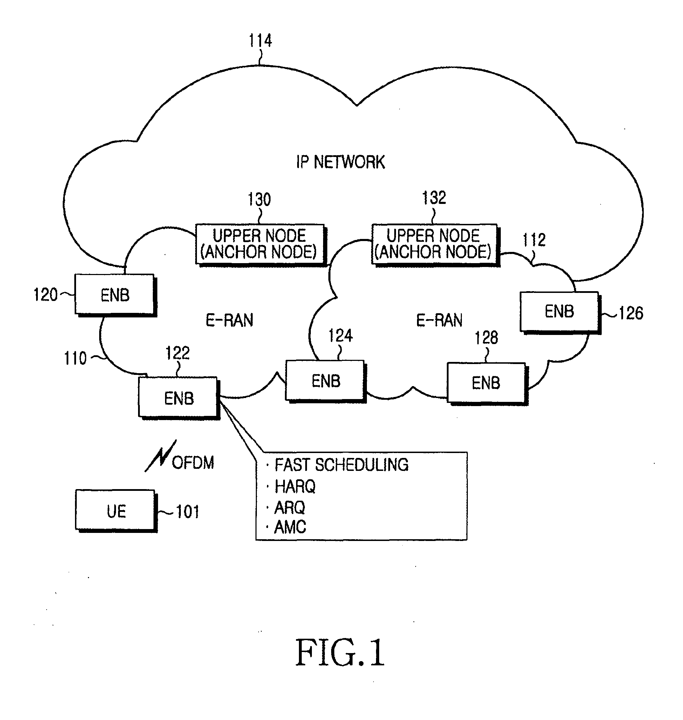

FIG. 1 illustrates an exemplary configuration of an Evolved UMTS mobile communication system.

Referring to FIG 1, a configuration of Evolved UMTS Radio Access Networks (E-UTRANs or E-RANs) 110 and 112 is simplified to a 2-node configuration of Evolved Node Bs (ENBs or Node Bs) 120, 122, 124, 126 and 128, and upper layers (or anchor nodes) 130 and 132. A User Equipment (UE) 101 accesses an Internet Protocol (IP) network by the E-RANs 110 and 112.

The ENBs 120 to 128, nodes corresponding to Node Bs (i.e. base stations) of the UMTS system, are connected to the UE 101 over a wireless channel. Compared with the existing base stations, the ENBs 120 to 128 perform more complex functions.

In LTE, all user traffic, including real-time services such as Voice over IP (VoIP) service, are serviced over a shared channel, and the ENBs 120 to 128 collect status information of UEs and perform scheduling depending thereon.

It is expected that the LTE system will use Orthogonal Frequency Division Multiplexing (OFDM) as wireless access technology in a 20-MHz bandwidth in order to realize a data rate of a maximum of 100 Mbps. In addition, the LTE system will employ Adaptive Modulation & Coding (AMC) that determines a modulation scheme and a channel coding rate according to the channel status of UEs.

In the LTE system, like in the mobile communication system using High Speed Downlink Packet Access (HSDPA) or the mobile communication system using Enhanced Uplink Dedicated Channel (E-DCH), Hybrid Automatic Repeat reQuest (HARQ) is performed between ENBs 120 to 128 and UE 101. However, with use of only the HARQ, the LTE system cannot satisfy the various Quality of Service (QoS) requirements. Therefore, outer Automatic Repeat reQuest (ARQ) can be performed in an upper layer, and the outer ARQ is also performed between ENBs 120 to 128 and UE 101.

HARQ is a technique for soft-combining previously received data with retransmitted data without discarding the previously received data, thereby increasing the reception success rate. More specifically, an HARQ receiving (Rx) entity determines the presence/absence of errors in a received packet, and sends a Positive Acknowledgement (ACK) signal or a Negative Acknowledgement (NACK) signal to an HARQ transmitting (Tx) entity according to the presence/absence of error. The HARQ Tx entity performs retransmission of the HARQ packet or transmission of a new HARQ packet according to the HARQ ACK/NACK signal. The HARQ Rx entity soft-combines a retransmitted packet with a previously received packet, thereby reducing the error rate.

The HARQ transmission technique is classified into synchronous HARQ and asynchronous HARQ according to the time the retransmission is performed. In synchronous HARQ, retransmission on a particular HARQ packet is always performed after a lapse of a predetermined time from when the time the previous transmission was completed. However, in asynchronous HARQ, retransmission on a particular HARQ packet is notified through control information regardless of the time when the previous transmission was completed. Therefore, asynchronous HARQ is an HARQ technique which is free in terms of the retransmission time.

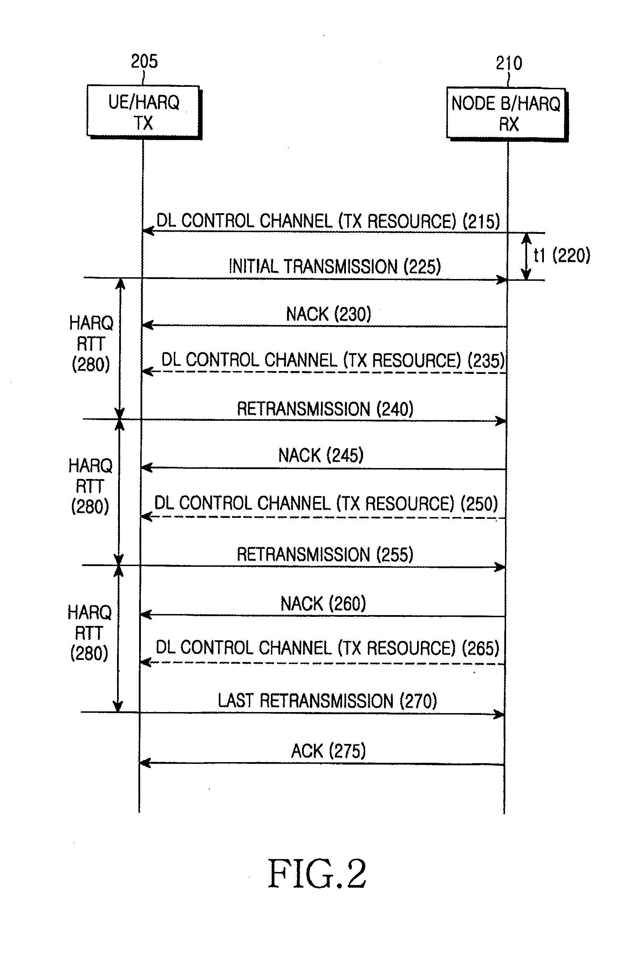

FIG 2 illustrates an example of a synchronous HARQ operation. With reference to FIG 2, an operation of synchronous HARQ will now be described in detail. In the illustrated exemplary uplink transmission, an HARQ Tx entity 205 is a UE and an HARQ Rx entity 210 is a Node B.

In the system to which Node B scheduling is applied, like in the LTE system, a UE 205 cannot start uplink transmission until it is allocated a transmission resource from a Node B 210. For example, if the UE 205 notifies the Node B 210 of the presence of transmission data through a predetermined procedure like the scheduling request, the Node B 210 determines a transmission resource that it will allocate to the UE 205, using a specific scheduling algorithm. In addition, the Node B 210 notifies the UE 205 of transmission resource allocation information indicating the allocated transmission resource over a downlink (DL) control channel (see 215).

The UE 205 transmits an HARQ packet using the allocated transmission resource after a lapse of a predetermined time 't1' 220 from the time when the transmission resource allocation information was received (see 225).

If the UE 205 initially transmits the HARQ packet (see 225), the Node B 210 decodes the HARQ packet, and checks a Cyclic Redundancy Check (CRC) code of the decoded HARQ packet to determine the presence/absence of errors in the HARQ packet. In the presence of errors, the Node B 210 stores the HARQ packet in a combining buffer, and sends an HARQ NACK to the UE 205 (see 230).

Upon receipt of the HARQ NACK, the UE 205 retransmits the HARQ packet (see 240), and the Node B 210 soft-combines the retransmitted HARQ packet with the previous HARQ packet stored in the combining buffer. The Node B 210 decodes the combined packet and checks a CRC code thereof. If there is still an error as a result of the CRC check, the Node B 210 stores the decoded HARQ packet in the combining buffer, and sends a HARQ NACK to the UE 205 (see 245).

The UE 205 repeats retransmission of the HARQ packet (see 255 and 270) until it receives an HARQ ACK from the Node B 210 or the number of retransmissions for the HARQ packet reaches a predetermined allowed value (see 275). The UE 205 receives from the Node B 210 transmission resource allocation information indicating a transmission resource necessary for each retransmission (see 235, 250 and 265), before retransmitting the HARQ packet.

In the synchronous HARQ scheme, a time difference between the initial transmission 225 and retransmissions 240, 255 and 270 of the HARQ packet is referred to as an 'HARQ Round Trip Time (RTT)' 280. That is, the HARQ RTT 280 refers to the time for each retransmission, required when the UE 205 receives a NACK from the Node B 210 after transmitting the HARQ packet to the Node B 210, and then retransmits the HARQ packet after it is reallocated a transmission resource.

It is preferable in the synchronous HARQ scheme that the same transmission resource is used for the initial transmission and the retransmissions. In this case, the same transmission resource is used for the initial transmission 225, the first retransmission 240, the second retransmission 255, and the last retransmission 270. However, when the same transmission resource is used for the initial transmission and the retransmissions in this manner, it is very inefficient that the Node B 210 re-signals the transmission resource to be used for every retransmission (see 235, 250 and 265).

Therefore, there is a need to solve the problem of signaling the transmission resource at every retransmission in synchronous HARQ.

### SUMMARY OF THE INVENTION

An aspect of the present invention is to address at least the above problems and/or disadvantages and to provide at least the advantages described below. Accordingly, an aspect of the present invention is to provide a method and apparatus for retransmitting a packet in a synchronous manner in a mobile communication system.

Another aspect of the present invention is to provide a method and apparatus for efficiently allocating a transmission resource without transmitting transmission resource allocation information at every retransmission in a mobile communication system using synchronous HARQ.

According to one aspect of the present invention, there is provided a method for performing Hybrid Automatic Repeat reQuest (HARQ) of a packet in a mobile communication system. The method includes receiving from a Node B over a downlink control channel transmission resource allocation information indicating a transmission resource for uplink packet transmission and also indicating a valid duration of the transmission resource; and transmitting an HARQ packet using the transmission resource through an HARQ operation for the valid duration.

According to another aspect of the present invention, there is provided a User Equipment (UE) apparatus for performing Hybrid Automatic Repeat reQuest (HARQ) of a packet in a mobile communication system. The UE apparatus includes an HARQ processor for transmitting an HARQ packet through an HARQ operation; a control channel processor for receiving over a downlink control channel transmission resource allocation information indicating a transmission resource for uplink packet transmission and also indicating a valid duration of the transmission resource; and a controller for controlling the HARQ processor to retransmit the HARQ packet using the transmission resource for the valid duration.

According to further another aspect of the present invention, there is provided a method for retransmitting a packet in a mobile communication system. The method includes transmitting to a User Equipment (UE) over a downlink control channel transmission resource allocation information indicating a transmission resource for uplink packet transmission and also indicating a valid duration of the transmission resource; and receiving a Hybrid Automatic Repeat reQuest (HARQ) packet through an HARQ operation using the transmission resource for the valid duration.

According to yet another aspect of the present invention, there is provided a Node B apparatus for performing Hybrid Automatic Repeat reQuest (HARQ) of a packet in a mobile communication system. The Node B apparatus includes an HARQ processor for receiving an HARQ packet through an HARQ operation; a control channel processor for transmitting over a downlink control channel transmission resource allocation information indicating a transmission resource for uplink packet transmission and also indicating a valid duration of the transmission resource; and a controller for determining the transmission resource and the valid duration, and controlling the HARQ processor to receive the HARQ packet using the transmission resource for the valid duration.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating an exemplary configuration of an Evolved UMTS mobile communication system;
FIG. 2 is a diagram illustrating a synchronous HARQ operation in a mobile communication system;
FIG. 3 is a diagram illustrating the overall operation of a mobile communication system according to a first embodiment of the present invention;
FIG. 4 is a flow diagram illustrating an operation of a UE according to the first embodiment of the present invention;
FIG. 5 is a diagram illustrating the overall operation of a mobile communication system according to a second embodiment of the present invention;
FIG. 6 is a flow diagram illustrating an operation of a UE according to the second embodiment of the present invention;
FIG. 7 is a flow diagram illustrating another operation of a UE according to the second embodiment of the present invention;
FIG 8 is a diagram illustrating the overall operation of a mobile communication system according to a third embodiment of the present invention;
FIG. 9 is a flow diagram illustrating an operation of a UE according to the third embodiment of the present invention;
FIG 10 is a diagram illustrating the possible problems occurring when an HARQ ACK is misconceived as an HARQ NACK;
FIG 11 is a flow diagram illustrating the overall operation of a mobile communication system according to a fourth embodiment of the present invention;
FIG 12 is a diagram illustrating a UE operation according to the fourth embodiment of the present invention;
FIG 13 is a block diagram illustrating a structure of a UE apparatus according to a preferred embodiment of the present invention; and
FIG. 14 is a block diagram illustrating a structure of a Node B apparatus according to a preferred embodiment of the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

One objective of the present invention is to reduce a signaling load for transmission resource allocation information by avoiding transmission of transmission resource allocation information for HARQ retransmission in a process of allocating a transmission resource in a synchronous HARQ scheme. Because the synchronous HARQ is generally used in the uplink, a description of the present invention will be made herein with reference to the uplink throughout the specification. However, if synchronous HARQ is used even in the downlink, the present invention can be applied without separate modification.

In synchronous HARQ, there is a high possibility that the allocation of transmission resources will be achieved individually for each HARQ processor. Unless stated otherwise herein, the expiration of a valid duration of an allocated transmission resource means expiration of valid duration of a transmission resource allocated for a particular HARQ processor, and the end (or termination) of transmission by a UE means that the UE ends transmission through a particular HARQ processor.

### First Embodiment

In a first embodiment, a Node B scheduler, when it allocates a transmission resource, includes signals that include the number of possible uses of the transmission resource. Use times (or use points) of the allocated transmission resource are spaced from each other by a predetermined so-called HARQ RTT period in the time domain. That is, a UE can repeatedly use the transmission resource allocated by the Node B scheduler a predetermined number of times with the time difference of the HARQ RTT. The predetermined number of times can be indicated by time invervals, by way of example.

The Node B, when it allocates a transmission resource, also signals a valid duration for which the transmission resource is valid. The UE uses the transmission resource for the valid duration. The valid duration means the number of sub-frames or the number of Transmission Time Intervals (TTIs), for which the UE can use the transmission resource. The TTI, a time unit for transmission, can be equal to the sub-frame, or can be composed of multiple consecutive sub-frames. For convenience, the TTI is assumed herein to be equal to the sub-frame. TTIs of the valid duration are spaced by HARQ RTT in the time domain.

In the following description of embodiments of the present invention, the following mobile communication system will be used by way of example.

In the system, transmission resource units, called R1, R2, R3, R4, R5, R6, R7 and R8, can be used, and a Node B can allocate one or multiple transmission resource units to a UE. In the LTE system, each of the transmission resource units may mean a specific frequency band or sub-carriers available for one sub-frame.

The Node B and the UE recognize the time by using a sub-frame number or a combination of a frame number and a sub-frame number.

For reference, a description of the frame and the sub-frame will now be given. Generally, in a mobile communication system, a frame or a sub-frame is used as a time unit. For example, in the UMTS system, a length of one frame is 10 msec. As the Node B periodically broadcasts a frame number of the present time, the UE and the Node B can identify the time by using the frame number.

The frame number can have a hierarchical configuration. For example, in the LTE system, because the unit for the transmission/reception is a short time of 0.5 msec, a time longer than 10 msec can be used as a unit of the frame, and 0.5 msec can be used as a unit of the sub-frame. That is, in the system where one frame having a 10-msec length is composed of 20 sub-frames having a 0.5-msec length, a combination of a frame number and a sub-frame number can be used as an index of the time. For example, the time `2505.11' means a sub-frame #11 in a frame #2505.

Although only the sub-frame number will be considered herein, the frame number and the sub-frame number can also be used together in an application of the present invention.

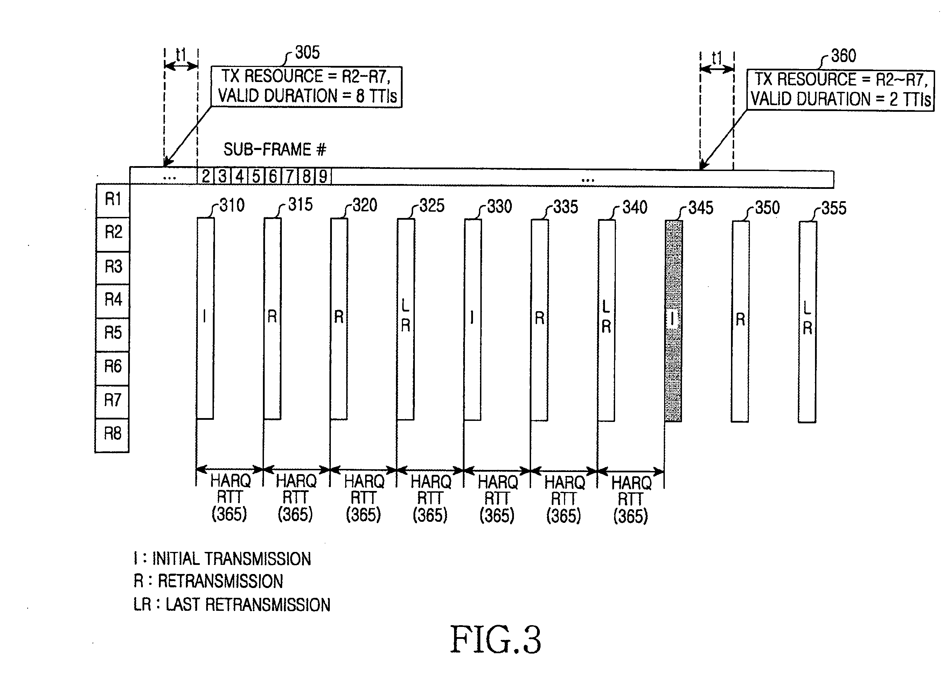

FIG 3 illustrates a process of performing synchronous HARQ according to the first embodiment of the present invention.

Referring to FIG. 3, in step 305, a Node B, while allocating a first transmission resource of [R2 ~ R7] to a UE, sets a valid duration of the first transmission resource to 8 TTIs, and signals the 8-TTI valid duration. In step 310, the UE, receiving the allocated first transmission resource from the Node B, performs initial transmission on a packet [1], which is a first HARQ packet, using the first transmission resource at a sub-frame #2 indicating the time t1 has elapsed from the time the UE was allocated the first transmission resource. The HARQ packet refers to a Protocol Data Unit (PDU) generated, for example, in a Media Access Control (MAC) layer. In steps 315, 320 and 325, the UE repeatedly performs retransmission on the packet [1] at intervals of HARQ RTT 365 until the UE receives an ACK from the Node B in response to the packet [1]. The HARQ RTT 365 is 4 TTIs.

If the signaled 8-TTI valid duration is not expired even after completing transmission of the packet [1], the UE can start transmission of a packet [2], which is a second HARQ packet, using the first transmission resource. If the transmission of the packet [1] is completed after 3 retransmissions, the UE starts in step 330 transmission of the packet [2] using the first transmission resource after HARQ RTT 365 has elapsed from the last transmission of the packet [1].

The UE repeats the foregoing operation until the 8-TTI valid duration expires. That is, HARQ retransmission of the packet is repeated until the UE receives an ACK for the packet from the Node B. The UE performs the retransmission within the maximum retransmission limit (i.e. maximum possible number of retransmissions). For example, for maximum retransmission limit = 3, the UE performs the last retransmission of the packet [1] in step 325 regardless that an ACK for the last retransmission will be received.

In step 335, upon a failure to receive an ACK from the Node B in response to the initial transmission of the packet [2], the UE performs retransmission of the packet [2] after a lapse of HARQ RTT 365. The maximum retransmission limit can be independently defined for every HARQ packet, or for HARQ packets belonging to the same flow. If the maximum retransmission limit of the packet [2] is 2, or as the packet [2] is received successfully at the Node B after 2 transmissions, the last transmission for the packet [2] is achieved in step 340.

In step 345, the UE performs initial transmission on a packet [3], which is a third packet, using the first transmission resource. Thereafter, the 8-TTI valid duration allocated for the first transmission resource expires. Because the transmission of the packet [3] is not completed as an ACK for the packet [3] has not yet been received, the Node B signals, in step 360, to the UE a second transmission resource of [R2 ~ R7] and 2-TTI valid duration set for the second transmission resource so that the UE can complete the transmission of the packet [3]. Although the second transmission resource is shown herein to be equal to the first transmission resource, the second transmission resource can be allocated to be different from the first transmission resource. In steps 350 and 355, the UE retransmits the packet [3] using the second transmission resource for the 2-TTI spacing by HARQ RTT 365.

Herein, the 't1' is a time difference between the time when the transmission resource allocation information indicating a transmission resource and its valid duration is received, and the time when the transmission resource allocated through the transmission resource allocation information can be actually used. Upon receiving a transmission resource allocated from the Node B, the UE generates a packet to be transmitted through the allocated transmission resource. After receiving the transmission resource allocation information, the UE needs a certain time until it transmits a packet using the allocated transmission resource, and this is called 't1' herein. The 't1' is a parameter defined separately for each system, and the UE and the Node B recognize a size of the 't1' before performing communication.

As described above, in performing HARQ retransmission, the UE performs the retransmission using the previously allocated transmission resource without the reallocation of a separate transmission resource from the Node B, for the valid duration. Therefore, there is no need to separately perform signaling on the transmission resource allocation information at every transmission of the HARQ packet between the Node B and the UE, facilitating efficient use of the limited signaling resources.

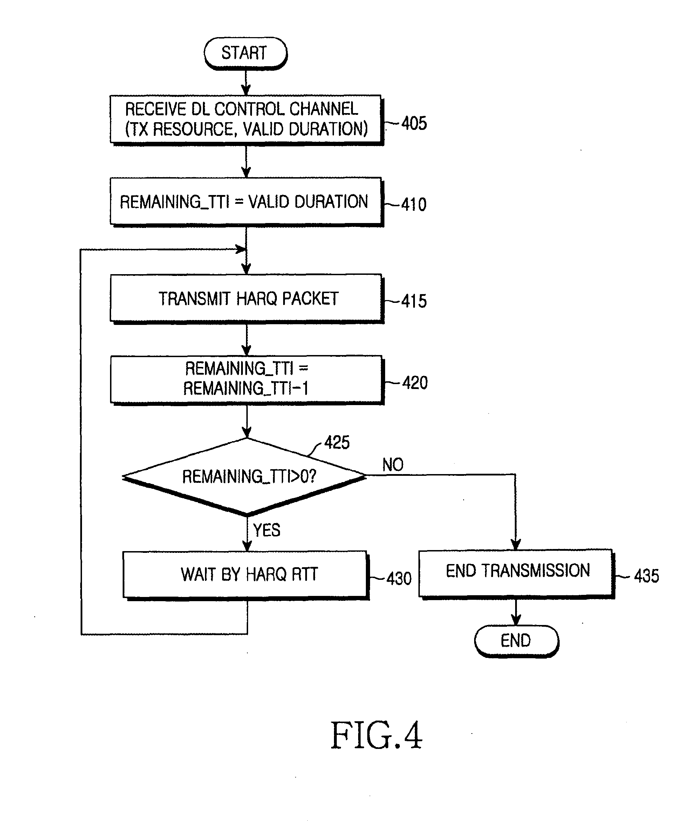

FIG. 4 illustrates an operation of a UE according to the first embodiment of the present invention.

Referring to FIG. 4, a UE checks a downlink control channel to determine whether there is a transmission resource allocated thereto. The downlink control channel is a control channel of Layer 1 (L1) or Layer 2 (L2), over which transmission resource allocation information is transmitted. The downlink control channel can be similar in structure to a conventional and similar channel like the High Speed Shared Control Channel (HS-SCCH). While the HS-SCCH contains control information for only one UE, the downlink control channel of the LTE system can contain transmission resource allocation information for multiple UEs.

In step 405, the UE receives transmission resource allocation information over the downlink control channel. The transmission resource allocation information includes transmission resource information indicating a transmission resource and valid duration information indicating a valid duration. The valid duration is the number of sub-frames or the number of TTIs for which the transmission resource is valid.

In step 410, the UE stores a value signaled as the valid duration in a parameter of Remaining_TTI. The Remaining_TTI, a parameter used for monitoring the validity of the transmission resource, decreases by 1 every time the UE uses the transmission resource. If the parameter is 0, it is considered that the transmission resource is no longer valid.

In step 415, the UE transmits or retransmits an HARQ packet using the transmission resource after waiting the t1, and then proceeds to step 420 where it decreases the Remaining_TTI by 1. That is, if there is an HARQ packet whose transmission is not completed before the transmission resource allocation information is received, the UE performs retransmission on the HARQ packet using the transmission resource. The UE determines in step 425 whether the Remaining_TTI is greater than 0. If the Remaining_TTI is not greater than 0, which implies the expiration of the valid duration, the UE proceeds to step 435 where it ends the transmission based on the transmission resource and waits until a new transmission resource is reallocated. However, if the Remaining_TTI is greater than 0, indicating a non-expiration of the valid duration, the UE proceeds to step 430 where it retransmits the HARQ packet after waiting an HARQ RTT, or returns to step 415 to transmit a new HARQ packet.

In the first embodiment of the present invention, if a length of the valid duration, i.e. the number of TTIs, is not equal to the number of transmissions necessary for the completion of an HARQ packet transmission, a new transmission resource should be reallocated in the course of transmission of the HARQ packet. For example, in FIG. 3, if the UE was allocated the first transmission resource of [R2 ~ R7] at the sub-frame #2 for the 8-TTI valid duration, 4 TTIs were used for the completion of the packet transmission [1], and 3 TTIs were used for the completion of the packet transmission [2], then the of the packet transmission [3] starts in the last TTI.

If the transmission of the packet [3] is failed at first attempt, the Node B should transmit the transmission resource allocation information to complete the transmission of the packet [3]. The transmission of the transmission resource allocation information for the transmission of the packet [3] is performed in step 360 of FIG. 3.

### Second Embodiment

In a second embodiment, a unit of valid duration has a variable length so that the valid duration should be coincident with the number of transmissions and retransmissions necessary for the completion of an HARQ packet transmission. In the second embodiment, a unit of the valid duration is defined as the number of TTIs necessary for the completion of one HARQ packet transmission. Therefore, a unit of the valid duration has a variable value according to channel status of a UE.

For example, if the transmission of an HARQ packet is completed at a first attempt as the UE is in a good channel environment, a unit of the valid duration is 1 TTI. However, if the transmission of an HARQ packet is fails as the UE is in a bad channel environment, a unit of the valid duration is the number of transmissions for the HARQ packet, performed by an HARQ Tx entity.

For reference, in HARQ transmission, a maximum retransmission limit is individually defined for every HARQ packet. This is because it is preferable to newly start the transmission of the next HARQ packet, as HARQ retransmission gain converges on 0 if the number of retransmissions exceeds a predetermined value.

The transmission of an HARQ packet is completed when an ACK for the HARQ packet is received, or when the number of retransmissions for the HARQ packet reaches the maximum retransmission limit. The UE and the Node B recognize the completion of the HARQ packet transmission in the following manner.

If an ACK for the HARQ packet is received or the number of retransmissions for the HARQ packet has reached a predetermined maximum retransmission limit, the UE considers that the transmission of the HARQ packet is completed. The Node B, if it sends an ACK for the HARQ packet, considers that the transmission of the HARQ packet is completed. In addition, if the Node B receives a new HARQ packet even though it has not transmitted an ACK for the HARQ packet, the Node B considers that the transmission of the previous HARQ packet has been completed.

The Node B signals to the UE the number of HARQ packets, transmission of which it can complete using a transmission resource, as a valid duration of the transmission resource, so that a unit of the valid duration can be variably defined according to the number of TTIs necessary for the completion of the HARQ packet transmission. The UE uses the transmission resource until it completes transmission for the number HARQ packets.

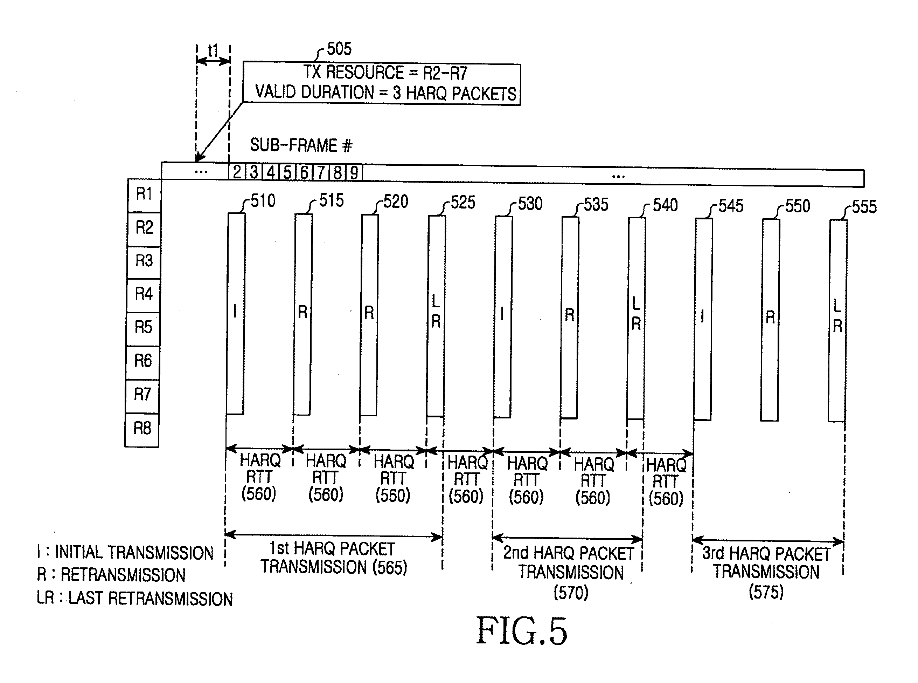

FIG. 5 illustrates the overall operation according to the second embodiment of the present invention.

Referring to FIG 5, in step 505, a Node B signals to a UE a first transmission resource of [R2 ~ R7] with transmission resource information, and a valid duration of 3 HARQ packets with valid duration information. This means that the UE can complete transmission for 3 HARQ packets using the first transmission resource of [R2 ~ R7].

In step 510, the UE starts transmission of a packet [1], which is a first HARQ packet, using the first transmission resource at a sub-frame #2. In step 515, the UE retransmits the packet [1] after a lapse of HARQ RTT 560 from the initial transmission. In step 520, the UE second-retransmits the packet [1] after a lapse of HARQ RTT 560 from the retransmission of the packet [1]. If a maximum retransmission limit of the packet [1] is 3, third retransmission of step 525 is the last retransmission of the packet [1] no matter whether or not an ACK of the packet [1] is received.

If the transmission of the packet [1] is completed after the third retransmission, the UE starts in step 530 transmission of a packet [2], which is a second HARQ packet. In steps 535 and 540, the UE repeatedly retransmits the packet [2] until an ACK is received from the Node B in response to the packet [2] or the number of retransmissions reaches a maximum retransmission limit of the packet [2]. In step 545, the UE starts transmission of a packet [3], which is a third HARQ packet. If the transmission of the packet [3] is completed, the valid duration signaled in step 505 expires. Therefore, the UE waits until it is allocated a new transmission resource from the Node B.

In the second embodiment, 4 TTIs are required for the transmission completion of the packet [1] (see 656), 3 TTIs are required for the transmission completion of the packet [2] (see 570), and 3 TTIs are required for the transmission completion of the packet [3] (see 575). By using the number of the transmission completions for the HARQ packet as a unit of the valid duration in this manner, expiration of the valid duration coincides with the completion of the HARQ packet transmission. Therefore, unlike the first embodiment, the second embodiment need not reallocate a transmission resource for the HARQ packet whose transmission is not completed.

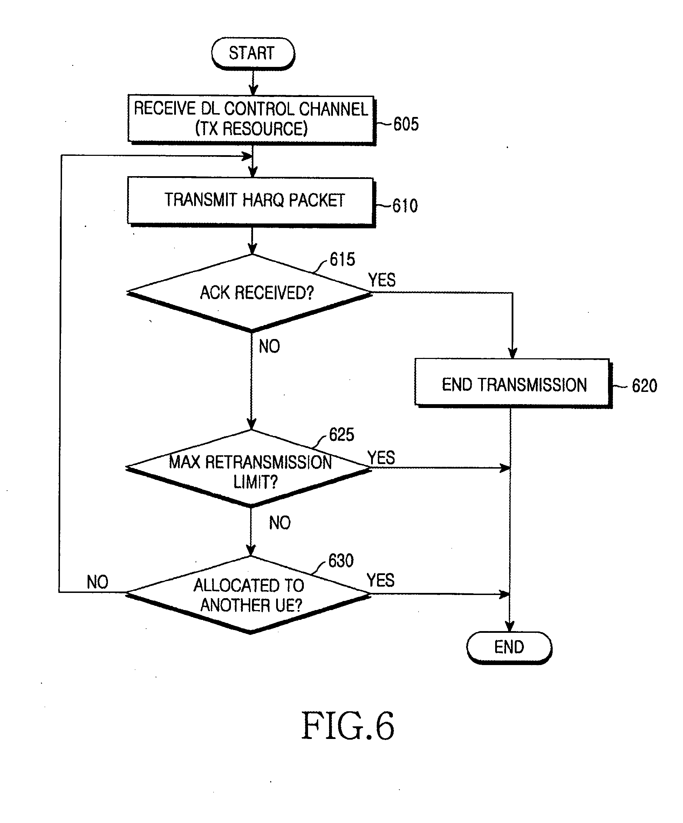

FIG. 6 illustrates an operation of a UE according to the second embodiment of the present invention. In the illustrated UE operation, a valid duration is 1 HARQ packet, which is the simplest case. In this case, it is preferable that the valid duration is not separately signaled.

Referring to FIG 6, the UE checks a downlink control channel to determine whether there is a transmission resource allocated thereto. In step 605, the UE receives transmission resource allocation information over the downlink control channel. The transmission resource allocation information is composed of transmission resource information indicating a transmission resource, and does not include valid duration information. Therefore, the UE can use the transmission resource until the transmission of one HARQ packet is completed, considering that the valid duration is 1 HARQ packet.

In step 610, the UE transmits an HARQ packet using the transmission resource after waiting the t1. In step 615, the UE determines whether a feedback signal for the HARQ packet is an ACK or a NACK. If the feedback signal is an ACK, the UE proceeds to step 620, and if the feedback signal is a NACK, the UE proceeds to step 625. In step 620, the UE ends the transmission of the HARQ packet, and waits until a new transmission resource is reallocated.

In step 625, the UE determines whether the number of retransmissions for the HARQ packet has reached a predetermined maximum retransmission limit. If so, the UE proceeds to step 620 where the UE ends the transmission of the HARQ packet and waits until a new transmission resource is reallocated. However, if the number of retransmissions has reached the predetermined maximum retransmission limit, the UE proceeds to step 630.

In step 630, the UE determines whether the transmission resource to be used for the retransmission of the HARQ packet is allocated to another UE.

If the feedback signal for the previously transmitted HARQ packet was an HARQ NACK, the UE performs retransmission on the HARQ packet after a lapse of HARQ RTT from the previous transmission. However, even though the feedback signal actually transmitted by the Node B is an HARQ ACK, if the UE has misinterpreted the HARQ ACK as an HARQ NACK, the Node B will allocate, to another UE, the transmission resource that the UE will use for retransmission. As a result, multiple UEs use the same transmission resource, thereby causing data collision and a waste of the transmission resource due to the collision.

In order to cope with the error situation in which an HARQ ACK is misinterpreted as an HARQ NACK, the UE, even before expiration of the valid duration, determines in step 630 whether its own transmission resource is allocated to another UE, and retransmits the HARQ packet only when its own transmission resource is not allocated to another UE. In allocating a transmission resource, the Node B transmits transmission resource allocation information not only to the UE that is presently allocated the transmission resource, but also to the UE that has previously used the transmission resource.

An operation of the UE in step 630 will now be described in more detail. The UE determines whether the transmission resource allocated thereto has been allocated to another UE depending on the transmission resource allocation information received at the t1 time prior to the sub-frame at which retransmission of the HARQ packet will be performed. If its own allocated transmission resource has been allocated to another UE, the UE proceeds to step 620 where it ends the transmission of the HARQ packet and waits until a new transmission resource is reallocated. Otherwise, the UE returns to step 610 where it retransmits the HARQ packet using the transmission resource allocated in step 605.

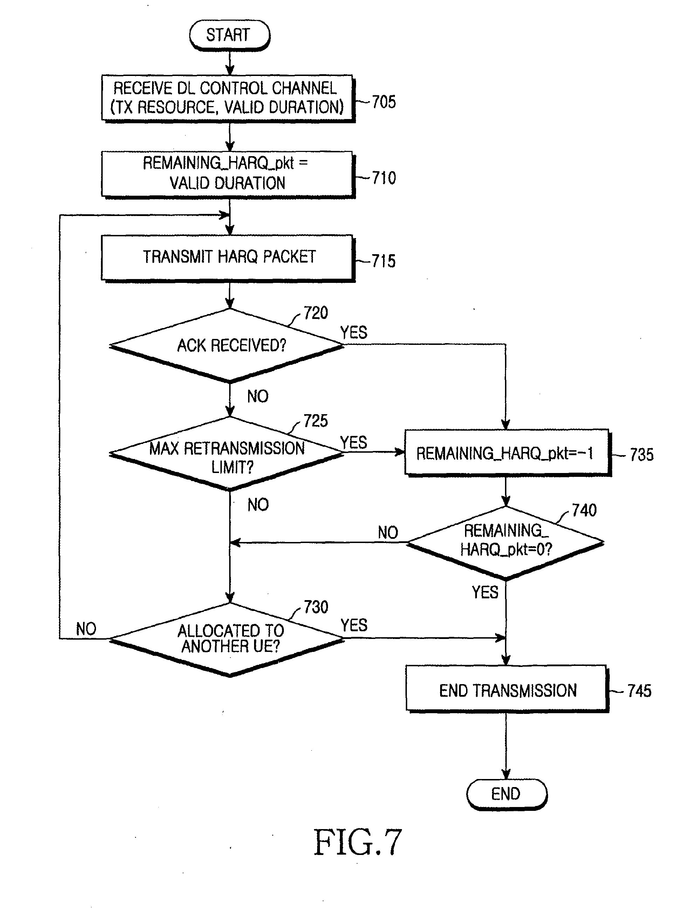

FIG 7 illustrates another operation of a UE according to the second embodiment of the present invention. In the illustrated UE operation, the valid duration is 2 or more HARQ packets.

Referring to FIG 7, the UE checks a downlink control channel to determine whether there is a transmission resource allocated thereto. In step 705, the UE receives the transmission resource allocation information over the downlink control channel. The transmission resource allocation information is composed of the transmission resource information and the valid duration information. The valid duration information indicates a valid duration, which is the number of HARQ packets, the transmission of which the UE can complete using the transmission resource indicated by the transmission resource information.

In step 710, the UE stores a value signaled as the valid duration in a parameter of Remaining_ HARQ_pkt. In step 715, the UE transmits a HARQ packet using a transmission resource indicated by the transmission resource information after waiting the t1. In step 720, the UE determines whether a feedback signal for the HARQ packet is an HARQ ACK or an HARQ NACK. If the feedback signal is an HARQ ACK, the UE proceeds to step 735. However, if the feedback signal is an HARQ NACK, the UE proceeds to step 725.

In step 735, the UE ends the transmission of the HARQ packet and decreases Remaining_HARQ_pkt by 1. In step 740, the UE determines if Remaining_HARQ_pkt is 0, to determine if the valid duration of the transmission resource has expired. If Remaining_HARQ_pkt is 0, i.e. if the valid duration of the transmission resource has expired, the UE proceeds to step 745 where it ends the transmission of the HARQ packet and waits until a new transmission resource is reallocated.

However, if it is determined in step 740 that the valid duration of the transmission resource has not expired, i.e. if the Remaining_HARQ_pkt is greater than 0, the UE determines in step 730 whether the transmission resource to be used for the transmission of a new packet has been allocated to another UE. The UE operation in step 730 is equal to the operation described in step 630. If the transmission resource has been allocated to another UE, the UE proceeds to step 745. Otherwise, the UE returns to step 715.

In step 725, the UE determines whether the number of retransmissions for the HARQ packet has reached a predetermined maximum retransmission limit. If the number of retransmissions has reached the maximum retransmission limit, the UE proceeds to step 735. However, if the number of retransmissions has not reached the maximum retransmission limit, the UE proceeds to step 730 to determine whether the transmission resource to be used for retransmission of the HARQ packet has been allocated to another UE.

### Third Embodiment

In a third embodiment, a unit of the valid duration is fixed, and if the transmission of an HARQ packet is not completed until the expiration of the valid duration, the valid duration is automatically extended until the transmission of the HARQ packet is completed.

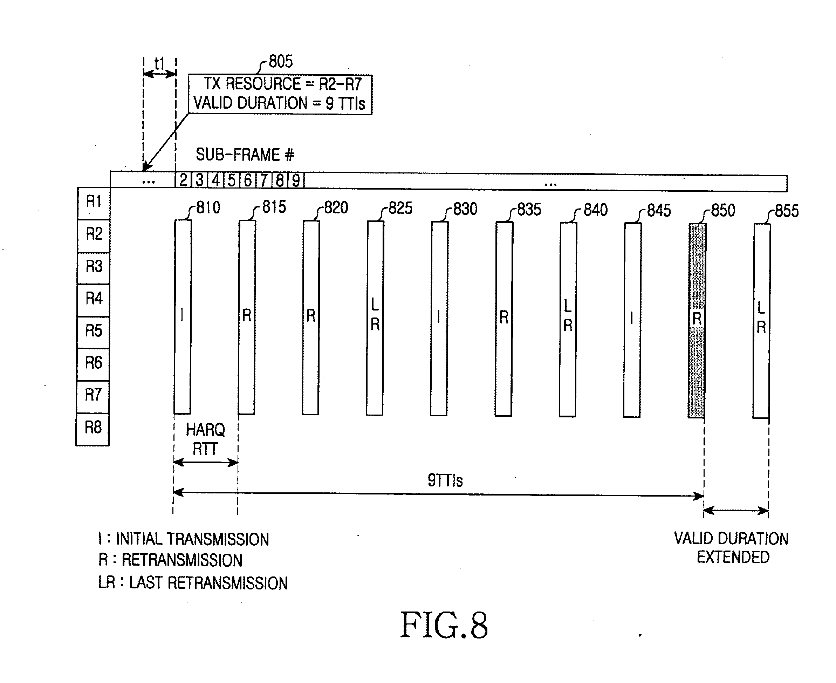

FIG. 8 illustrates the overall operation according to the third embodiment of the present invention.

Referring to FIG. 8, in step 805, a Node B signals to a UE a transmission resource of [R2 ~ R7] with transmission resource information, and a 9-TTI valid duration with valid duration information. This means that the UE can use the transmission resource of [R2 ~ R7] for a minimum of 9 TTIs. In steps 810, 815, 820, 825, 830, 835, 840, 845 and 850, the UE, like in the first embodiment, performs the transmission and retransmission of HARQ packets for 9 TTIs which are spaced by HARQ RTT.

If the transmission of the HARQ packet, which is transmitted at the last TTI 850 in which the valid duration expires, is not completed, the UE uses the transmission resource until the transmission of the HARQ packet is completed. In other words, the valid duration of the transmission resource is automatically extended until the transmission of the HARQ packet is completed.

The UE retransmits the HARQ packet using the transmission resource information received in step 805, without receiving the transmission resource information for the retransmission of the HARQ packet from the Node B. That is, the UE extends the valid duration received through step 805.

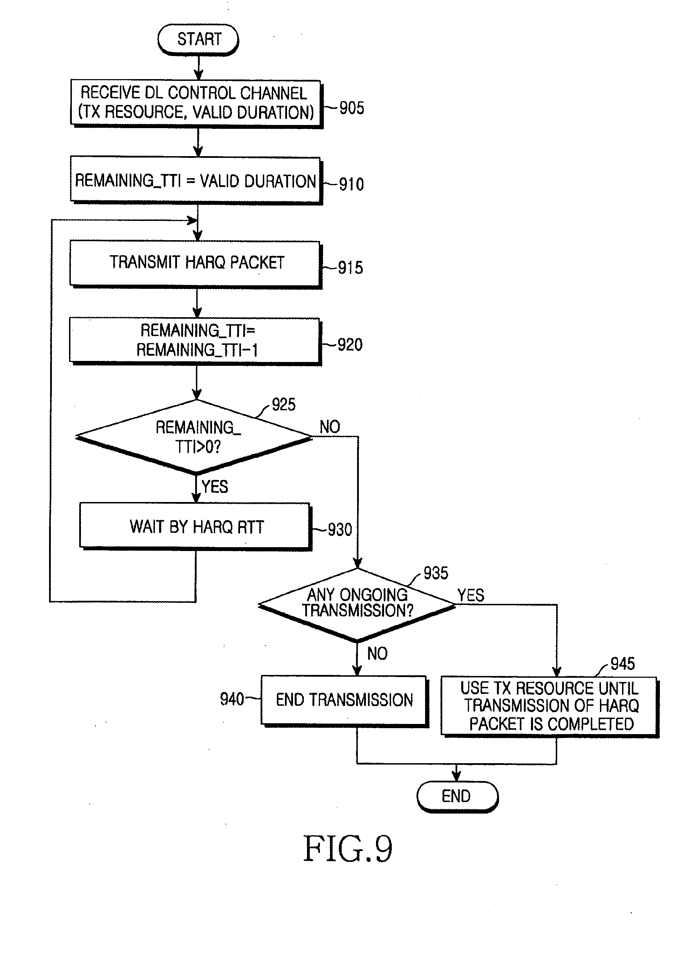

FIG. 9 illustrates an operation of a UE according to the third embodiment of the present invention.

Referring to FIG. 9, the UE checks a downlink control channel to determine whether there is a transmission resource allocated thereto. In step 905, the UE receives transmission resource allocation information over the downlink control channel. The transmission resource allocation information is composed of the transmission resource information and the valid duration information, and the valid duration indicated by the valid duration information means the minimum number of TTIs for which a transmission resource indicated by the transmission resource information is valid.

In step 910, the UE stores a value signaled as the valid duration in a parameter of Remaining_TTI. The Remaining_TTI, a parameter used for monitoring the validity of the transmission resource, decreases by 1 every time the UE uses the transmission resource. If the parameter becomes equal to 0, the UE uses the transmission resource only until the ongoing transmission of the HARQ packet is completed.

In step 915, the UE transmits or retransmits the HARQ packet using the transmission resource, and then proceeds to step 920 where the UE decreases Remaining_TTI by 1. In step 925, the UE determines whether Remaining_TTI is greater than 0. If Remaining_TTI is not greater than 0, indicating the expiration of the valid duration, the UE proceeds to step 935. However, if Remaining_TTI is greater than 0, indicating the non-expiration of the valid duration, the UE proceeds to step 930. In step 930, the UE waits HARQ RTT, and then returns to step 915.

In step 935, the UE determines whether there is any ongoing transmission of an HARQ packet. The ongoing transmission of an HARQ packet means the transmission of an HARQ packet, for which an ACK of the HARQ packet has not been received or the number of retransmissions for the HARQ packet has not reached the maximum retransmission limit. If there is no ongoing transmission of an HARQ packet, meaning coincidence which represents a coinciding between the expiration of the valid duration and the transmission completion of the HARQ packet, the UE proceeds to step 940 where it waits until a new transmission resource is allocated.

If there is an ongoing transmission of an HARQ packet after the expiration of the valid duration of the transmission resource, the UE proceeds to step 945 where it extends the transmission resource allocated in step 905 until the transmission of the HARQ packet is completed.

Similarly, after the valid duration of the transmission resource has expired, a Node B determines whether there is any ongoing transmission of an HARQ packet by the UE. If there is any ongoing transmission of an HARQ packet, the Node B extends the valid duration of the transmission resource allocated to the UE until the transmission of the HARQ packet is completed. In this case, the Node B transmits no separate transmission resource allocation information to the UE.

### Fourth Embodiment

A fourth embodiment provides an HARQ packet transmission scheme for preventing a waste of transmission resources, which may occur when an HARQ ACK is misinterpreted as an HARQ NACK (hereinafter referred to as an "HARQ ACK/NACK error"). Specifically, the fourth embodiment limits a valid duration of a transmission resource to a maximum of 'n' transmissions until an HARQ ACK for an HARQ packet is received.

The second embodiment of the present invention described above defines a valid duration of a transmission resource allocated through a downlink control channel, as a period for which transmission for one HARQ packet is completed. If an HARQ ACK/NACK error occurs during transmission/reception of an HARQ packet, the unnecessary retransmissions performed until the number of retransmissions has reached the maximum retransmission limit may cause a waste of the transmission resources.

Therefore, the fourth embodiment independently limits the valid duration for an individual HARQ packet, to cope with an HARQ ACK/NACK error.

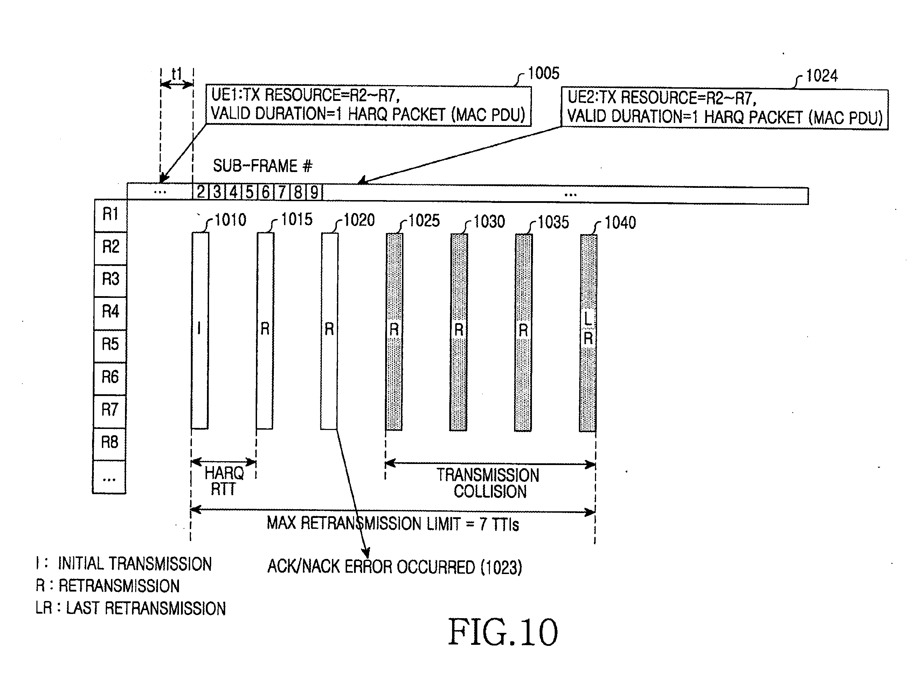

FIG. 10 illustrates the possible problems occurring when an HARQ ACK is misinterpreted as an HARQ NACK.

Referring to FIG. 10, in step 1005, if a Node B signals to a UE1 a transmission resource of [R2 ~ R7] and a 1-HARQ packet (or 1-MAC PDU) valid duration, the UE1 uses the [R2 ~ R7] until transmission for one HARQ packet is completed.

Specifically, in step 1010, the UE1 initially transmits a packet [1], which is its own HARQ packet, using [R2 ~ R7] at a sub-frame #2, and after a lapse of HARQ RTT, the UE1 performs in steps 1015 and 1020 retransmissions on the packet [1] using [R2 ~ R7]. In each of the steps, upon receipt of the packet [1] through the transmission resource of [R2 ~ R7], the Node B checks for the presence/absence of an error through a CRC operation on the packet [1], and determines to send an HARQ NACK in the presence of an error. However, in the absence of an error, the Node B determines to send an HARQ ACK. The determined feedback signal is sent to the UE 1.

The Node B performs a CRC operation on the packet [1] retransmitted in step 1020 and sends an HARQ ACK, determining that there is no error. However, in the bad wireless environment, the HARQ ACK may be erroneously sent to the UE1 as an HARQ NACK. This is referred to as the occurrence of an HARQ ACK/NACK error 1023.

In step 1024, the Node B, because it has sent an HARQ ACK for the packet [1], allocates the transmission resource of [R2 ~ R7], which was allocated to the UE1, to a UE2. However, because the UE1 has misinterpreted that it has received an HARQ NACK, the UE1 performs the retransmission on the packet [1] using the [R2 ~ R7] until 7 TTIs, which are the maximum retransmission limit, in steps 1025, 1030, 1035 and 1040, determining that transmission of the packet [1] is not completed and thus the [R2 ~ R7] are still allocated thereto.

In other words, until the number of retransmissions reaches a maximum retransmission limit of the packet currently transmitted by the UE1 or the UE2, data signals from the UEs are transmitted through the [R2 ~ R7]. As a result, the data signals collide with each other in steps 1025, 1030, 1035 and 1040, wasting the transmission resource. If an HARQ ACK/NACK error occurs in this manner, transmission resources can be wasted during the entire period up to the maximum retransmission limit of the HARQ packet.

In order to maximize efficiency of HARQ transmission/reception, a considerably great maximum retransmission limit is used. However, given that most HARQ operations are completed before the number of retransmissions reaches the maximum retransmission limit, if a valid duration of a transmission resource is appropriately adjusted, it is possible to prevent the major waste of transmission resources, which may occur due to the HARQ ACK/NACK error.

Although the second embodiment of the present invention defines a valid duration of a transmission resource as an instance in which an ACK for an HARQ packet is received or the number of retransmissions reaches a maximum retransmission limit, the fourth embodiment of the present invention defines a valid duration of a transmission resource as an instance in which an ACK for an HARQ packet is received or the number of retransmissions reaches a predetermined number 'n' of retransmissions. Therefore, according to the fourth embodiment, if a UE has failed to receive an ACK for an HARQ packet before the number of retransmissions reaches the predetermined number 'n' of retransmissions, the UE temporarily stops retransmission on the HARQ packet until a new transmission resource is allocated, determining that the allocated transmission resource is no longer valid.

For convenience, the defined valid duration information is referred to herein as a 'single grant'. If a transmission resource is allocated with a single grant, the UE can transmit an HARQ packet using the transmission resource within a predetermined number 'n' of retransmissions until an ACK for the HARQ packet is received. As for the 'n', a network can individually determine an appropriate value for each UE and notify the UE of the value during a call setup, or can broadcast the value as system information in each cell so that all UEs located in the same cell can use the same value.

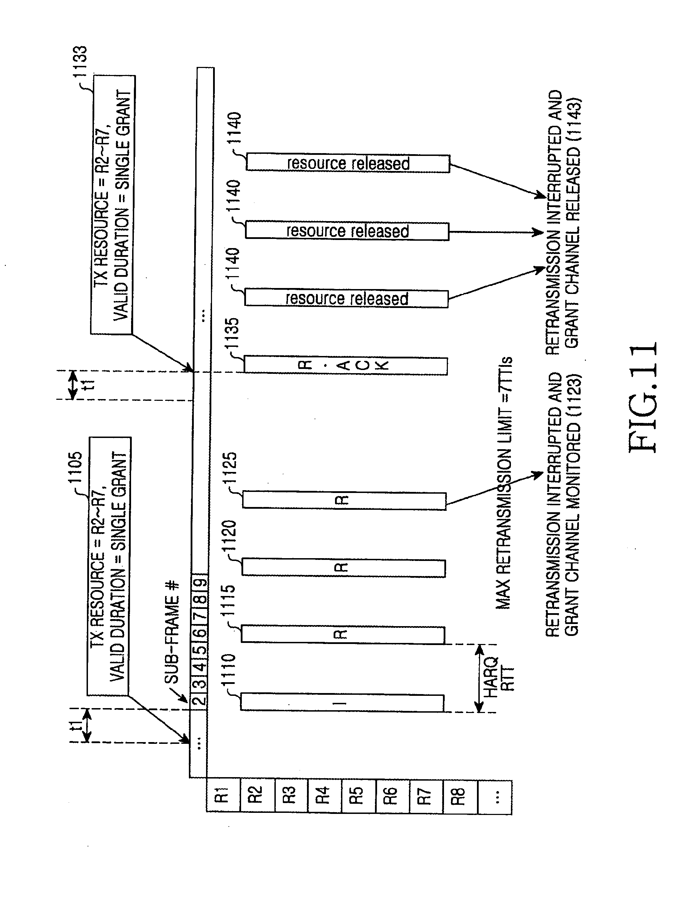

FIG 11 illustrates the overall operation according to the fourth embodiment of the present invention.

Referring to FIG 11, in step 1105, a Node B signals to a UE a first transmission resource of [R2 ~ R7] with transmission resource information and a 'single grant' with valid duration information. The single grant indicates, for example, '4', and the UE and the Node B each understand the indication of the single grant. The UE transmits an HARQ packet using the first transmission resource of [R2 ~ R7] until an HARQ ACK is received. If the UE fails to receive the HARQ ACK even though it has transmitted the HARQ packet 4 times, the UE can no longer use the first transmission resource.

By restricting the maximum retransmission number for the allocated transmission resource to '4' in this manner, the fourth embodiment prevents a waste of the transmission resource from exceeding a maximum of 4 transmissions even though an HARQ ACK/NACK error occurs. That is, the UE can use the allocated transmission resource until the number of retransmissions is equal to a maximum of the number of transmissions (for example, the number of TTIs) indicated by the single grant.

In steps 1110, 1115, 1120 and 1125, the UE transmits an packet [1], which is a first HARQ packet, using the first transmission resource of [R2 ~ R7], and fails to receive an HARQ ACK from a Node B even though it has performed the transmission and retransmissions on the packet [1] for 4 TTIs indicated by the single grant. Accordingly, in step 1123, even though the number of retransmissions has not reached 7 TTIs which is the maximum retransmission limit preset for the packet [1], the UE stops the transmission based on the first transmission resource and monitors a downlink control channel, since the first transmission resource of [R2 ~ R7] is no longer valid.

Because the Node B has failed to successfully receive the packet [1] from the UE for 4 TTIs, the Node B signals in step 1133 to the UE a second transmission resource of [R2 ~ R7] with the transmission resource information, and a single grant of 4 TTIs with valid duration information over a downlink control channel. Although the second transmission resource is shown herein to be equal to the first transmission resource, the second transmission resource can be allocated to be different from the first transmission resource.

In step 1135, the UE transmits the packet [1], transmission of which is now in progress, using the second transmission resource. Upon receipt of an HARQ ACK for the packet [1] transmitted in step 1135, the UE considers in step 1140 that the second transmission resource is released, and ends in step 1143 the retransmission through the second transmission resource. If the Node B sends an HARQ ACK after its success in receiving the packet [1], the Node B releases the second transmission resource allocated to the UE, and then allocates the transmission resource to another UE, if necessary.

If the total number of transmissions for the packet [1] through the first and second transmission resources has reached 7 TTIs, which is the maximum retransmission limit, the UE can end the retransmission on the packet [1] even though a valid duration indicated by the single grant has not expired and an HARQ ACK for the packet [1] has not been received from the Node B.

As described above, the fourth embodiment of the present invention restricts a valid duration of a transmission resource to a maximum of 'n' transmissions before until an HARQ ACK is received. As for the 'n', a predetermined value can be used, or a Node B can individually select an appropriate value for each UE and then signal the value to the UE. Preferably, the 'n' is set less than a maximum retransmission limit of an HARQ packet.

For example, a valid duration field indicating the valid duration information can be used in the following meaning:
0: persistent transmission resource allocation
1: single grant, i.e. a transmission resource is available for up to 'n' transmissions, and is automatically released in the case of a successful transmission before 'n' transmissions.
2. other uses

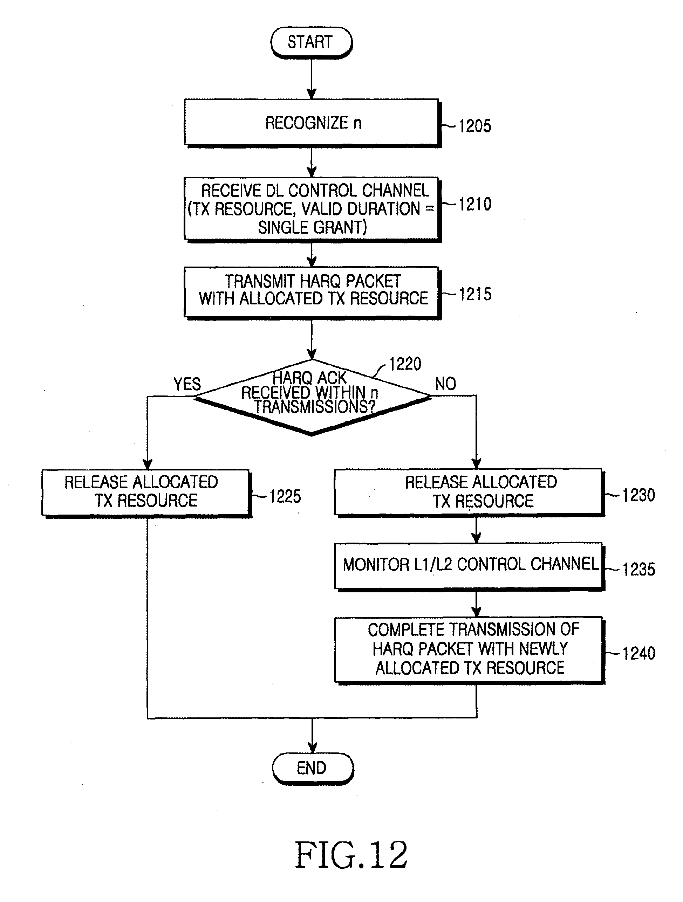

FIG. 12 illustrates a UE operation performed when the number of retransmissions is defined as 'n' TTIs according to the fourth embodiment of the present invention.

Referring to FIG. 12, a UE recognizes in step 1205 a single grant 'n' in an idle state, in a call setup process, or through hardware setup. In addition, the UE checks a downlink control channel to determine whether there is a transmission resource allocated thereto. In step 1210, the UE receives the transmission resource allocation information over the downlink control channel. The transmission resource allocation information is composed of the transmission resource information indicating a transmission resource, and the valid duration information indicating a valid duration. The valid duration information contains a value indicating that the allocated transmission resource is allocated with a single grant.

The single grant means that the UE can transmit an HARQ packet using the allocated transmission resource until an HARQ ACK for the HARQ packet is received or the number of retransmissions reaches a predetermined number 'n'. The 'n', a value which can be individually allocated for each UE, can be determined depending on QoSs of the services configured in the UE. The 'n' can be set to a value which is similar to an HARQ operation point. A greater 'n' increases a transmission resource wasted due to an HARQ ACK/NACK error and decreases the frequency of the transmission of the transmission resource allocation information. However, a less 'n' increases the frequency of transmission of the transmission resource allocation information, but decreases a transmission resource waste due to an HARQ ACK/NACK error.

In step 1215, the UE transmits/retransmits an HARQ packet using the transmission resource. In step 1220, the UE determines whether the transmission of the HARQ packet has been completed within 'n' transmissions. The completion of an HARQ packet transmission means that an HARQ ACK for the HARQ packet has been received or the number of retransmissions has reached a maximum retransmission limit. If the UE fails to complete the transmission of the HARQ packet, the UE proceeds to step 1230. However, if the UE has completed the transmission of the HARQ packet before the 'n' transmissions, the UE proceeds to step 1225 where it releases the transmission resource and then monitors a downlink control channel for the transmission of a new HARQ packet.

However, upon the failure to complete the transmission of the HARQ packet, the UE releases in step 1230 the transmission resource, and monitors in step 1235 a downlink control channel to receive a new allocated transmission resource to be used for the completion of the HARQ packet transmission. In step 1240, if the UE is allocated a new transmission resource through the downlink control channel, the UE completes the transmission of the HARQ packet using the new transmission resource.

After transmitting, to a UE, the transmission resource allocation information including the transmission resource information and the valid duration information being set with a single grant over a downlink control channel, a Node B attempts to receive an HARQ packet from the UE through a transmission resource indicated by the transmission resource information. If the Node B has sent an HARQ ACK for the HARQ packet within 'n' repeated transmissions for the HARQ packet, or if the number of retransmissions has reached a maximum retransmission limit of the HARQ packet, the Node B releases the transmission resource and allocates a new transmission resource to be used for receiving a new HARQ packet, through a downlink control channel. However, if the Node B fails to complete the reception of the HARQ packet within 'n' repeated transmissions, i.e., if the Node B fails to send an HARQ ACK for the HARQ packet within 'n' repeated transmissions, or if the number of retransmissions has reached the maximum retransmission limit of the HARQ packet, the Node B releases the transmission resource and allocates a new transmission resource to be used for the receiving of the HARQ packet, through the downlink control channel.

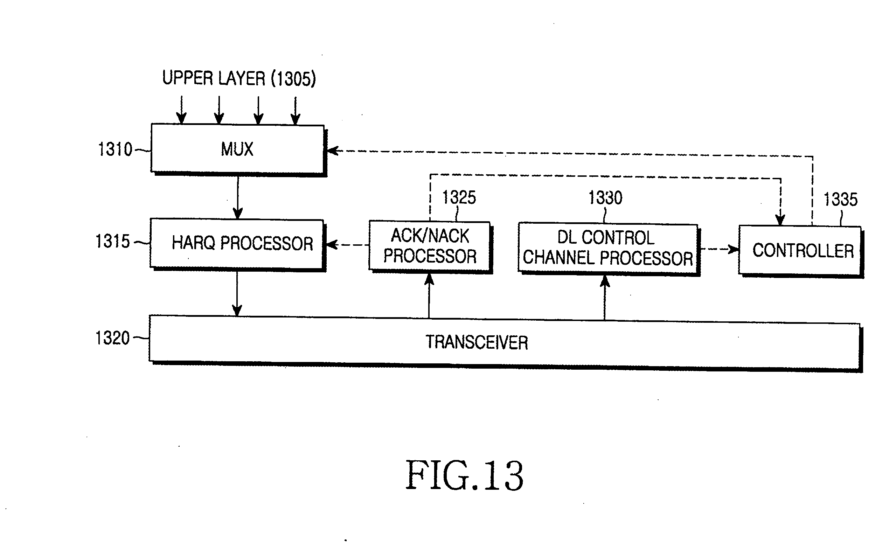

FIG. 13 illustrates a structure of a UE apparatus according to a preferred embodiment of the present invention. The UE includes a multiplexer 1310, an HARQ processor 1315, a transceiver 1320, an ACK/NACK processor 1325, a downlink control channel processor 1330, and a controller 1335.

Referring to FIG. 13, the multiplexer 1310 multiplexes upper layer data delivered from upper layer entities 1305, into one HARQ packet. Upon receiving from the controller 1335 a command for generating a new HARQ packet, the multiplexer 1310 receives upper layer data from at least one of the upper layer entities 1305 taking into account the priority of the upper layer entities 1305, multiplexes the upper layer data into an HARQ packet, and delivers the HARQ packet to the HARQ processor 1315.

The HARQ processor 1315 transmits the HARQ packet delivered from the multiplexer 1310, through a HARQ operation. That is, the HARQ processor 1315 transmits the HARQ packet, and then receives a feedback signal for the HARQ packet from the ACK/NACK processor 1325. If the feedback signal is an ACK, the HARQ processor 1315 discards the HARQ packet stored therein, and if the feedback signal is a NACK, the HARQ processor 1315 performs retransmission on the HARQ packet when the controller 1335 permits the transmission.

The transceiver 1320 up-converts an HARQ packet delivered from the HARQ processor 1315 into a radio signal and transmits the radio signal, and receives a feedback signal and a downlink control channel signal, and delivers the signals to relevant blocks.

The ACK/NACK processor 1325 analyzes the feedback signal to determine whether it is an ACK or a NACK, and notifies the receipt of the ACK/NACK to the controller 1335 and the HARQ processor 1315. The downlink control channel processor 1330 processes the downlink control channel signal delivered from the transceiver 1320, analyzes transmission resource allocation information included in the downlink control channel signal, and delivers the transmission resource information and the valid duration information extracted from the transmission resource allocation information to the controller 1335.

The controller 1335 controls HARQ packet retransmission of the HARQ processor 1315 and an operation of the multiplexer 1310 depending on the transmission resource information and the valid duration information delivered from the downlink control channel processor 1330. If the UE is allocated a transmission resource, the controller 1335 sends to the multiplexer 1310 a command for generating a new HARQ packet, and then monitors the transmission status of the HARQ packet. In addition, if a valid duration of the transmission resource has not expired, the controller 1335 controls the HARQ processor 1315 to perform the retransmission of the HARQ packet, and if the transmission of the HARQ packet has been completed before the expiration of the valid duration, the controller 1335 controls the multiplexer 1310 and the HARQ processor 1315 to generate and transmit a new HARQ packet.

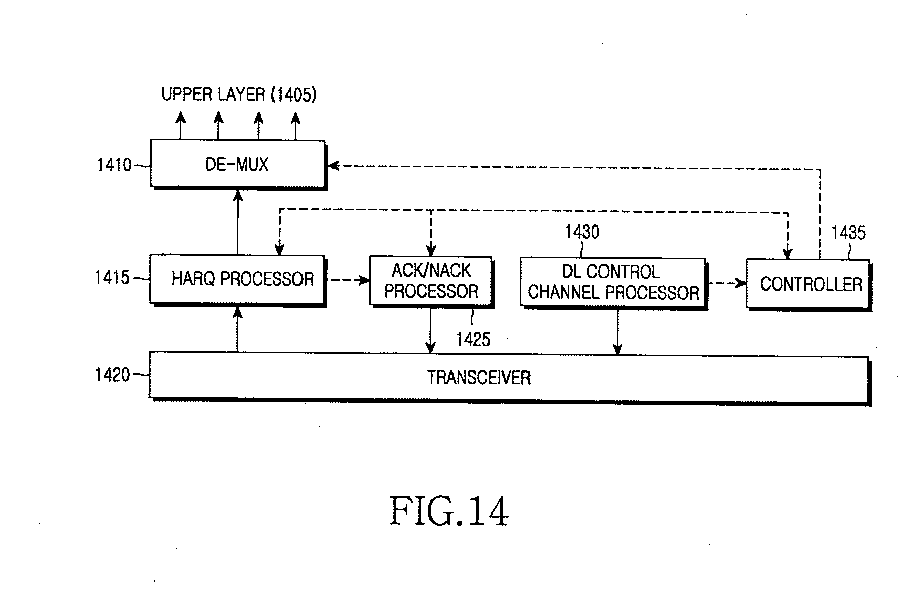

FIG 14 illustrates a structure of a Node B apparatus according to a preferred embodiment of the present invention. The Node B includes a demultiplexer 1410, an HARQ processor 1415, a transceiver 1420, an ACK/NACK processor 1425, a downlink control channel processor 1430, and a controller 1435.

Referring to FIG 14, the transceiver 1420 delivers an HARQ packet extracted from a received radio signal to the HARQ processor 1415, and up-converts a feedback signal and a downlink control channel signal from the ACK/NACK processor 1425 and the downlink control channel processor 1430 into a radio signal before transmission.

The HARQ processor 1415 receives the HARQ packet delivered by the transceiver 1420 through a specific HARQ operation, and delivers an ACK or a NACK (or a feedback signal) for the HARQ packet to the ACK/NACK processor 1425. If the feedback signal is a NACK, the ACK/NACK processor 1425 stores therein an HARQ packet(s) previously received until the HARQ packet is rereceived, when the controller 1335 permits reception. However, if the feedback signal is an ACK, the HARQ processor 1415 discards the HARQ packet previously stored therein.

The ACK/NACK processor 1425 converts an ACK/NACK from the HARQ processor 1415 into an ACK/NACK signal, and delivers the ACK/NACK signal to the transceiver 1420. The downlink control channel processor 1430 generates a downlink control channel signal including the transmission resource allocation information indicating a transmission resource and a valid duration determined by the controller 1435, and delivers the downlink control channel signal to the transceiver 1420.

The controller 1435 determines a transmission resource and a valid duration for a UE, delivers the determined information to the downlink control channel processor 1430, and controls an HARQ operation of the HARQ processor 1415 and an operation of the demultiplexer 1410. If the controller 1435 has allocated a transmission resource for a new HARQ packet, it sends a command for generating a new HARQ packet to the demultiplexer 1410, then monitors a transmission status of the HARQ packet. In addition, if a valid duration of the transmission resource has not expired, the controller 1435 controls the HARQ processor 1415 to perform the re-reception on the HARQ packet, and if the transmission of the HARQ packet has been completed before the expiration of the valid duration, the controller 1435 controls the HARQ processor 1415 to receive a new HARQ packet.

As is apparent from the foregoing description, in the system supporting synchronous HARQ, the present invention does not separately signal the transmission resource to be used for the retransmission, thereby reducing a signaling load for the transmission resource allocation information. As a result, the limited wireless resources can be efficiently used.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for performing Hybrid Automatic Repeat reQuest (HARQ) of a packet in a mobile communication system, the method comprising:
receiving from a Node B over a downlink control channel transmission resource allocation information indicating a transmission resource for uplink packet transmission and indicating a valid duration of the transmission resource; and
transmitting an HARQ packet using the transmission resource through an HARQ operation for the valid duration.

2. The method of claim 1, wherein the valid duration is set to a single grant indicating that the number of transmissions for the HARQ packet transmittable with the transmission resource is restricted to a predetermined number 'n' less than a maximum retransmission limit for the HARQ packet.

3. The method of claim 2, wherein the 'n' is determined during call setup or broadcast through system information of a cell.

4. The method of claim 2, wherein the transmitting step comprises:
transmitting and/or retransmitting the HARQ packet using the transmission resource;
if the transmission of the HARQ packet is completed within 'n' transmissions, releasing the transmission resource and monitoring a downlink control channel for a transmission of a new HARQ packet;
if the transmission of the HARQ packet is not completed within 'n' transmissions, releasing the transmission resource and monitoring the downlink control channel for a retransmission of the HARQ packet; and
receiving an allocation of a new transmission resource for the retransmission of the HARQ packet through the downlink control channel and completing the transmission of the HARQ packet using the new transmission resource.

5. The method of claim 1, wherein the valid duration indicates a number of Transmission Time Intervals (TTIs) for which the transmission resource is available for the uplink packet transmission.

6. The method of claim 5, wherein the TTIs have intervals of a predetermined HARQ Round Trip Time (RTT) each other.

7. The method of claim 1, wherein the valid duration indicates a number of HARQ packets transmittable with the transmission resource.

8. A User Equipment (UE) apparatus for performing Hybrid Automatic Repeat reQuest (HARQ) of a packet in a mobile communication system, the UE apparatus comprising:
an HARQ processor for transmitting an HARQ packet through an HARQ operation;
a control channel processor for receiving over a downlink control channel transmission resource allocation information indicating a transmission resource for uplink packet transmission and indicating a valid duration of the transmission resource; and
a controller for controlling the HARQ processor to retransmit the HARQ packet using the transmission resource for the valid duration.

9. The UE apparatus of claim 8, wherein the valid duration is set to a single grant indicating that the number of transmissions for the HARQ packet transmittable with the transmission resource is restricted to a predetermined number 'n' less than a maximum retransmission limit for the HARQ packet.

10. The UE apparatus of claim 9, wherein the 'n' is determined during call setup or broadcast through system information of a cell.

11. The UE apparatus of claim 9, wherein if the transmission of the HARQ packet using the transmission resource is completed within 'n' transmissions, the controller releases the transmission resource and controls the HARQ processor to transmit a new HARQ packet, and if the transmission of the HARQ packet is not completed within 'n' transmissions, the controller releases the transmission resource and controls the HARQ processor to retransmit the HARQ packet using a new transmission resource received over the downlink control channel.

12. The UE apparatus of claim 8, wherein the valid duration indicates a number of Transmission Time Intervals (TTIs) for which the transmission resource is available for the uplink packet transmission.

13. The UE apparatus of claim 12, wherein the TTIs have intervals of a predetermined HARQ Round Trip Time (RTT) each other.

14. The UE apparatus of claim 8, wherein the valid duration indicates a number of HARQ packets transmittable with the transmission resource.

15. A method for retransmitting a packet in a mobile communication system, the method comprising:
transmitting to a User Equipment (UE) over a downlink control channel transmission resource allocation information indicating a transmission resource for uplink packet transmission and indicating a valid duration of the transmission resource; and
receiving a Hybrid Automatic Repeat reQuest (HARQ) packet through an HARQ operation using the transmission resource for the valid duration.

16. The method of claim 15, wherein the valid duration is set to a single grant indicating that the number of transmissions for the HARQ packet transmittable with the transmission resource is restricted to a predetermined number 'n' less than a maximum retransmission limit for the HARQ packet.

17. The method of claim 16, wherein the 'n' is determined during call setup or broadcast through system information of a cell.

18. The method of claim 16, wherein the receiving step comprises:
attempting to receive the HARQ packet using the transmission resource;
if the reception of the HARQ packet is completed within 'n' transmissions, releasing the transmission resource and allocating a new transmission resource for the reception of a new HARQ packet through the downlink control channel;
if the reception of the HARQ packet is not completed within 'n' transmissions, releasing the transmission resource and allocating a new transmission resource for a retransmission of the HARQ packet through the downlink control channel; and
after allocating the new transmission resource for the retransmission of the HARQ packet through the downlink control channel, completing the reception of the HARQ packet using the new transmission resource.

19. The method of claim 15, wherein the valid duration indicates a number of Transmission Time Intervals (TTIs) for which the transmission resource is available for the uplink packet transmission.

20. The method of claim 19, wherein the TTIs have intervals of a predetermined HARQ Round Trip Time (RTT).

21. The method of claim 15, wherein the valid duration indicates a number of HARQ packets transmittable with the transmission resource.

22. A Node B apparatus for performing Hybrid Automatic Repeat reQuest (HARQ) of a packet in a mobile communication system, the Node B apparatus comprising:
an HARQ processor for receiving an HARQ packet through an HARQ operation;
a control channel processor for transmitting over a downlink control channel transmission resource allocation information indicating a transmission resource for uplink packet transmission and indicating a valid duration of the transmission resource; and
a controller for determining the transmission resource and the valid duration, and controlling the HARQ processor to receive the HARQ packet using the transmission resource for the valid duration.

23. The Node B apparatus of claim 22, wherein the valid duration is set to a single grant indicating that the number of transmissions for the HARQ packet transmittable with the transmission resource is restricted to a predetermined number 'n' less than a maximum retransmission limit for the HARQ packet.

24. The Node B apparatus of claim 23, wherein the 'n' is determined during call setup, or broadcast through system information of a cell.

25. The Node B apparatus of claim 23, whereinif the reception of the HARQ packet using the transmission resource is completed within 'n' transmissions, the controller allocates a new transmission resource for reception of a new HARQ packet through the downlink control channel, and if the reception of the HARQ packet is not completed within 'n' transmissions, the controller releases the transmission resource and allocates a new transmission resource for the re-reception the HARQ packet through the downlink control channel.

26. The Node B apparatus of claim 22, wherein the valid duration indicates a number of Transmission Time Intervals (TTIs) for which the transmission resource is available for the uplink packet transmission.

27. The Node B apparatus of claim 26, wherein the TTIs have intervals of a predetermined HARQ Round Trip Time (RTT).

28. The Node B apparatus of claim 22, wherein the valid duration indicates a number of HARQ packets transmittable with the transmission resource.
